Europäisches Patentamt

European Patent Office

Office européen des brevets

(19)

(11) Publication number:

**0 393 517**

**A2**

(12) **EUROPEAN PATENT APPLICATION**

(21) Application number: **90107046.6**

(51) Int. Cl.5: **B01D 53/36**

(22) Date of filing: **12.04.90**

(30) Priority: **17.04.89 IT 2017389**

(43) Date of publication of application:
**24.10.90 Bulletin 90/43**

(84) Designated Contracting States:
**AT BE CH DE DK ES FR GB GR IT LI NL SE**

(71) Applicant: **S.S.T. SOLID STATE TECHNOLOGIES S.r.L.**
**Via XXV Aprile, 10**
**I-20063 Cernusco Sul Naviglio (Milan)(IT)**

(72) Inventor: **Italiano, Pietro**
**Via Don Mazzolari, 3/A**
**I-20063 Cernusco sul Naviglio(IT)**
Inventor: **Colombo, Bruno**
**Via Carducci, 25**
**I-20093 Cologno Monzese (Milan)(IT)**

(74) Representative: **Gervasi, Gemma et al**
**NOTARBARTOLO & GERVASI Srl Viale**
**Bianca Maria 33**
**I-20122 Milan(IT)**

(54) Catalytic oxidation and reduction converter for internal combustion engine exhaust gases.

(57) A catalytic oxidation and reduction converter for internal combustion engine exhaust gases, for the complete combustion of the unburnt hydrocarbons and carbon monoxide and for the reduction of nitrogen oxides to elemental nitrogen and oxygen. As catalysts, said converter uses oxides of metals chosen from the group consisting of Cr, Mn, Fe, Co, Ni, Cu, Zn, Sn, Ba, La and Ce, in their inert species, with respect to environmental impact.

EP 0 393 517 A2

EP 0 393 517 A2

# CATALYTIC OXIDATION AND REDUCTION CONVERTER FOR INTERNAL COMBUSTION ENGINE EXHAUST GASES

## Field of the invention

This invention relates to a catalytic converter for application to the exhaust gas circuit of internal combustion engines for the purpose of eliminating incomplete combustion products from such gas before before its emission to the outside environment, in order to reduce its environmental impact.

## Prior art

Catalytic devices are known for abatement of the pollutant gases contained in internal combustion engine exhaust gas.

Such pollutant gases consist essentially of unburnt hydrocarbons, cracked hydrocarbons, carbon monoxide and nitrogen oxides.

The problem has been solved with the so-called catalytic muffler which, using catalysts based on noble metals such as platinum and rhodium, completely burns the hydrocarbons and carbon monoxide and decomposes the nitrogen oxides.

This solution, however, has various drawbacks such as the high cost of platinum and rhodium and the fact that catalysts based on these two metals are highly sensitive to poisoning by the lead and sulphur contained in gasoline. They therefore require that the gasoline used is lead-free and contains MTBE (= methyl t-butyl ether) as anti-knock agent. This itself creates further problems determined by the emission of cyclic hydrocarbons.

## Summary of the invention

We have now discovered a catalytic oxidation and reduction converter for internal combustion engine exhaust gases which overcomes the drawbacks of the known art. In particular, our catalytic converter is able to abate the pollutant gases of engines running on leaded gasoline, lead-free gasoline and alcohol.

Said converter is characterised in that the catalysts used are individual oxides or oxide mixtures of metals chosen from the group consisting of Cr, Mn, Fe, Co, Ni, Cu, Zn, Sn, Ba, La and Ce.

It can be mounted either at the outlet of the silencer or at the outlet of the engine manifolds. In the first case it is raised to reaction temperature by heating with an electrical resistance heater element. In the second case the heat of the exhaust gases rapidly and automatically produces the required triggering temperature on the catalyst. The oxidation and reduction reactions are exothermic and maintain within the catalyst bed temperatures which ensure continuation of the catalytic process.

## Detailed description of the invention

The characteristics and advantages of the catalytic converter for internal combustion engine exhaust gases according to the present invention will be further clarified by the following detailed description.

Said catalytic converter consists of a catalyst-filled metal chamber applied to the exit circuit of internal combustion engine exhaust gases, for pollutant-removal before their emission to the outside environment.

In addition to gaseous combustion products, said exhaust gases contain cracked and unburnt hydrocarbons, carbon monoxide and nitrogen oxides, the purpose of the converter being to effect complete combustion of the hydrocarbons and carbon monoxide and reduction of the nitrogen oxides to elemental nitrogen and oxygen. The converter according to the invention is suitable not only for engines running on leaded gasoline but also for engines running on lead-free gasoline or alcohols, in which case it eliminates the aromatic hydrocarbons which are produced in considerable quantity by the relative combustion.

The converter can be positioned at the outlet of the silencer or at the outlet of the engine manifolds. In the first case, the catalyst is maintained at a temperature sufficient for reaction purposes by an armoured electrical resistance heater element; in the second case as the catalyst is located immediately at the exit of the exhaust gases from the engine no heating device is necessary.

The catalyst consists of oxides of metals chosen from the group consisting of Cr, Mn, Fe, Co, Ni, Cu,

2

Zn, Sn, Ba, La and Ce. Said oxides can be either pure or supported, and can be single oxides, mixed oxides or oxide mixtures.

The catalysts can be in the form of pellets, tablets, beads or rings with a diameter of between 1 and 20 mm, or canaliculate monoliths of suitable shape.

Said catalysts, either pure or supported, single or mixed mixtures can be dispersed onaceramic monoliths, or on a metal support.

The aforesaid dimensions ensure low gas pressure drop through the catalyst bed.

The catalysts have a specific surface of between 1 and 200 $m^2/g$.

They are very active and can accommodate very high specific gas feed flow rates, typically of between 2,000 and 100,000 volumes of gas per volume of catalyst per hour.

With the catalysts according to the present invention the temperature at which the pollutant exhaust gases of internal combustion engines trigger reacting with air is between 200° C and 400° C.

We have found that of the various aforesaid catalytic systems, possibly with the addition of varying percentages of Pt and Pd, those which are particularly active in the oxidation and reduction of internal combustion engine exhaust gases are catalytic systems formed from Cu oxides, $Cr^{III}$ oxide and Ba oxide particularly with a Cu:Cr weight ratio of between 1:2 and 2:1.

These catalysts are prepared as extrusions by decomposition of salts, and before being placed in the catalytic converter they are calcined for 20-50 minutes between 800° C and 1000° C in air to stabilize their behaviour independently of the operating temperature.

The converter according to the invention consists of a steel cylinder of sufficient volume inserted downstream of the exhaust manifold from the engine cylinders and connected to the standard exhaust pipe.

The converter can be provided with an aperture for inspecting, adding and if necessary replacing the same catalyst.

It can be fitted with a temperature probe for monitoring the catalyst efficiency.

A nickel-chromium wire mesh of suitable aperture size is placed upstream and downstream to support and contain the catalyst mass.

The temperature profile of the catalyst bed during normal operation is between 350° C and 850° C. These temperature levels allow the use of normal construction materials.

In addition, the catalyst property by which the oxidation state varies according to the temperature profile ensures that the nitrogen oxides are reduced to elemental nitrogen.

By fitting a converter according to the invention containing a mixture of Cu, Cr and Ba oxides as catalyst at the outlet of the silencer of an engine running with leaded gasoline and maintaining the catalyst temperature above 300° C, the exit gas from the converter contains about 30 ppm of unburnt hydrocarbons, less than 100 ppm of CO and about 2 ppm of nitrogen oxides.

If the converter according to the invention containing a mixture of Cu, Cr and Ba oxides as catalyst is fitted immediately downstream of the manifolds of an internal combustion engine running on leaded gasoline, the results are the same.

In an applicational experiment, converters according to the invention were fitted to a FIAT Regata 70S automobile of the year 1983 and to a FIAT Croma CHT automobile of 1986, these equipped with a Weber suction carburettor and running on premium leaded gasoline.

The catalyst had the following characteristics:
- chemical composition (by weight): Cu 26%; Cr 21%; BaO = 11%.
- specific surface: 65 $m^2/g$;
- apparent density: 1.5 $g/cm^3$;
- total pore volume: 0.45 $cm^3/g$;
- mean pore radius: 70 Angstrom;
- pellet size: 3 mm

Each converter was filled with 2000 g of catalyst. The results are given in Table 1.

The converters of the above examples remained fitted for 2 weeks with the engine operating for some hours per day, for a total distance of about 5000 km of mainly urban way.

The converters were still operating perfectly at the end of this period.

It can be seen from the aforegoing that the converters according to the invention obviate the drawbacks of the known art. They are economical, are not poisoned by lead or sulphur contained in gasoline, do not undergo thermal shock and do not produce pollutants of any kind.

TABLE 1

Analysis of automobile exhaust gases

| Substance | **FIAT** Regata | | | | **FIAT** Croma | | | |
|---|---|---|---|---|---|---|---|---|
| | I.R. Examination with BOSCH equipment and service procedure | | | | Chemiluminescence: Engine at 3500 r.p.m. | | Chemiluminescence: Engine at 3500 r.p.m. | |
| | (a) | (b) | (a) | (b) | (a) | (b) | (a) | (b) |
| Hydrocarbons (ppm) | > 1000 | 25-35 | Saturation | 25-30 | | | | |
| CO (%) | 2-3 | Unmeasurable | Saturation | < 0,01 | | | | |
| $NO_x$ (ppm) | | | | | > 2000 | 1.1 | > 2000 | 1-2 |

(a) Engine without catalytic converter

(b) Engine with catalytic converter

**Claims**

1. A catalytic oxidation and reduction converter for the exhaust gases of internal combustion engines operating on leaded gasoline, lead-free gasoline and alcohol, characterised in that the catalysts used are oxides of metals chosen from the group consisting of Cr, Mn, Fe, Co, Hi, Cu, Zn, Sn, Ba, La, Ce.

2. A converter as claimed in claim 1, characterised in that said oxides are pure or supported.

3. A converter as claimed in claim 1, characterised in that said oxides are single or mixed oxides or oxide mixtures.

4. A converter as claimed in claim 1, characterised in that said oxides are in the form of pellets, tablets, rings, beads of diameter between 1 and 20 mm.

5. A converter as claimed in claim 1, characterised in that said catalysts are in the form of canaliculate monoliths.

6. A converter as claimed in claim 1, characterised in that said metal oxide catalysts are dispersed on a ceramic support.

7. A converter as claimed in claim 1, characterised in that said metal oxide catalysts are dispersed on a metal support.

8. A converter as claimed in claim 1, characterised in that said catalysts have a specific surface of between 1 and 200 $m^2/g$.

9. A converter as claimed in claim 1, characterised in that said catalysts consist of a mixture of Cu, Cr, and Ba oxides with a Cu:Cr weight ratio of between 1:2 and 2:1.

10. A converter as claimed in claim 7, characterised in that said catalysts are heat-stabilized by calcining at a temperature of between 800°C and 1000°C for a time of between 20 and 50 minutes.

11. A converter as claimed in claim 1, characterised by being positioned at the silencer outlet and being provided with an armoured electrical resistance heater element.

12. A converter as claimed in claim 1, characterised by being positioned at the outlet of the engine manifolds.

13. A converter as claimed in claim 1, characterised in that the temperature of the catalyst bed during normal operation is between 350°C and 850°C.

14. A converter as claimed in claim 1, operating with a specific gas flow rates of between 2,000 and 100,000 volumes of gas per volume of catalyst per hour.